# EUROPÄISCHE PATENTSCHRIFT

(11) **EP 2 657 000 B1**
(45) Veröffentlichungstag und Bekanntmachung des Hinweises auf die Patenterteilung: **28.12.2016**
(21) Anmeldenummer: 12002894.9
(22) Anmeldetag: 25.04.2012
(51) Int. Cl.: B29C 47/16, B29C 47/08, B29C 47/92

(54) **Vorrichtung zur Herstellung von flachbahnigen Erzeugnissen und Verfahren zu deren Einrichtung**
Device for producing flat products and method for setting device
Dispositif pour la production de produits plats et méthode pour régler le dispositif

(43) Veröffentlichungstag der Anmeldung: 30.10.2013
(73) Patentinhaber: MAKU AG, 6374 Buochs (CH)
(72) Erfinder: Maeder, Reto, 6374 Buochs (CH); Maeder, Robert, 6374 Buochs (CH)
(74) Vertreter: Rätsch, Caroline

(56) Entgegenhaltungen:
- EP-A2- 0 079 052
- CH-A1- 702 058
- DE-A1- 3 805 774
- DE-B- 1 202 973
- JP-A- 50 041 957
- JP-A- 54 153 877
- US-A- 3 985 845

## Beschreibung

Die Erfindung betrifft eine Vorrichtung zur Herstellung von flachbahnigen Erzeugnissen, mit einer Breitschlitzdüse, deren Spalt und/oder Staubalken mittels Schrauben einstellbar ist, mindestens einer Schraubeinrichtung zum Einstellen der Schrauben, und mit einer Traverse, auf der die Schraubeinrichtung hin- und herbewegbar ist.

Die Erfindung ist ferner gerichtet auf ein Verfahren zum Einrichten einer Vorrichtung zur Herstellung von flachbahnigen Erzeugnissen.

Als flachbahnige Erzeugnisse kommen insbesondere Kunststofffolien, aber auch beispielsweise Metall oder Glas in Betracht. Vereinfachend wird im Folgenden hauptsächlich auf Kunststofffolien Bezug genommen.

Es ist bekannt, Kunststofffolien in Folienextrusionsanlagen zu extrudieren. In diesen wird thermoplastischer Kunststoff zunächst auf eine erhöhte Temperatur gebracht, bis er erweicht. Der erweichte Kunststoff tritt aus dem Spalt einer Breitschlitzdüse aus, der das plastische Material in Folienform bringt. Zur Abkühlung des Folienmaterials kann nach der Breitschlitzdüse eine Kühlwalzenanordnung vorgesehen sein, die aus einer oder mehreren Kühlwalzen besteht.

Es wird angestrebt, eine möglichst gleich dicke Folienbahn über die gesamte Breite herzustellen. Dies ist besonders wichtig bei dünnen Folien. Hierzu weist die Breitschlitzdüse über ihre Breite verteilte Schrauben auf, durch die die Höhe des Düsenspalts einstellbar ist. Neben der Feinabstimmung des Querschnittsprofils des flachbahnigen Produktes muss der Spalt auch bei einem Produktwechsel dem jeweils neuen Erzeugnis angepasst werden. Die Schrauben erfüllen also sowohl die Funktion einer Feineinstellung als auch einer Anpassung an unterschiedliche Erzeugnisse.

Zusätzlich - oder in Ausnahmefällen alternativ - kann ein so genannter Staubalken vorgesehen sein, der innerhalb der Breitschlitzdüse angeordnet ist und für eine Verteilung des erweichten Kunststoffs über die Breite der Breitschlitzdüse sorgt. Der Staubalken ist ebenfalls über Einstellschrauben einstellbar, wobei durch ein Verstellen des Staubalkens über die Einstellschrauben der Strömungsquerschnitt zum Spalt hin verändert wird. Hierdurch kann ebenfalls Einfluss auf das Folienprofil genommen werden.

Die Schrauben zur Einstellung des Spalts oder des Staubalkens der Breitschlitzdüse erfolgt beispielsweise von Hand. Eine derartige Einstellung ist kostengünstig, jedoch im laufenden Betrieb zur Anpassung des Folienquerschnitts unpraktisch und langsam. Der durch die manuelle Einstellung im laufenden Prozess bedingte Materialverlust kann sehr hoch sein. Hinzu kommt, dass eine manuelle Anpassung bei einem Produktwechsel ebenfalls erhebliche Zeit in Anspruch nehmen kann. Dies wiederum bedeutet während der Stillstandzeit der Vorrichtung einen Produktionsausfall.

Alternativ zu einer manuellen Einstellung der Schrauben kann vorgesehen sein, dass jeder Schraube eine Schraubeinrichtung zugeordnet ist. Die Vorteile liegen auf der Hand. Es sind sowohl eine schnelle Regelung als auch eine schnelle Umrüstung auf neue Produktparameter möglich. Ein wesentlicher Nachteil besteht allerdings darin, dass die Schraubeinrichtungen teuer sind. Bedenkt man, dass eine Breitschlitzdüse durchaus eine Breite bis zu 3 Metern aufweisen kann und typischerweise der Schraubenabstand ca. 25 mm beträgt, wird deutlich, dass eine erhebliche Anzahl an Schraubeinrichtungen benötigt wird, um sämtliche Schrauben mittels stationärer Schraubeinrichtungen einzustellen.

Aus der Praxis (siehe zum Beispiel DE3805774 A1, EP0079052 A2 und CH702058 A1) ist eine Breitschlitzdüse bekannt, bei der zur Einstellung der Schrauben des Düsenspalts lediglich eine Schraubeinrichtung zum Einsatz kommt. Die Schraubeinrichtung ist entlang einer Traverse hin- und herfahrbar. Eine derartige Lösung weist grundsätzlich den Vorteil einer raschen Einstellung der Schrauben auf und ist gleichzeitig in erheblichem Maße günstiger als die Ausstattung der Breitschlitzdüse mit einer Vielzahl von stationären Schraubeinrichtungen. Hinzu kommt der Vorteil, dass die bekannte Lösung nachrüstbar ist. Bestehende Breitschlitzdüsen ohne eine automatische Einstellbarkeit der Schrauben können also durch die Traverse mit der Schraubeinrichtung ergänzt und dadurch vollautomatische Systeme geschaffen werden. Allerdings zeigt die Praxis, dass nicht ohne weiteres mit einer einzigen Schraubeinrichtung zuverlässig alle Schrauben ansteuerbar sind. Es kann zu Fehlansteuerungen kommen.

Ausgehend von dem bekannten Stand der Technik liegt der Erfindung die Aufgabe zugrunde, eine gattungsgemäße Vorrichtung zur Herstellung von flachbahnigen Produkten zu schaffen, mit der eine zuverlässige Einstellung sämtlicher Schrauben möglich ist.

Zur Lösung dieser Aufgabe ist die eingangs genannte Vorrichtung erfindungsgemäß dadurch gekennzeichnet, dass die Traverse auf der einen Seite der Breitschlitzdüse starr mit der Breitschlitzdüse verbunden ist, und dass die Vorrichtung auf der anderen Seite der Breitschlitzdüse mindestens eine Lageranordnung aufweist, die eine Relativbewegung zwischen der Breitschlitzdüse und der Traverse gestattet.

Der Erfindung liegt die Erkenntnis zugrunde, dass ein wesentlicher Grund für die Fehlansteuerung bekannter Systeme darin liegt, dass es durch Temperaturschwankungen zu Verschiebungen der Schraubenpositionen kommt. Hinzu kommen können temperaturbedingte Verspannungen zwischen der Breitschlitzdüse und der Traverse.

Hier greift die Erfindung ein.

Erfindungsgemäß ist vorgesehen, dass die Traverse auf der einen Seite der Breitschlitzdüse fest an der Breitschlitzdüse gehaltert ist. Auf ihrer anderen Seite hingegen ist durch die Lageranordnung eine Relativbewegung zwischen der Breitschlitzdüse und der Traverse möglich. Dies bedeutet, dass durch die Erfindung temperaturbedingte Ausdehnungen möglich sind, ohne dass es zu Verspannungen kommt. Versuche haben ergeben, dass zwischen dem Kaltzustand der Breitschlitzdüse bei Raumtemperatur und dem Betriebzustand die Längenausdehnung größenordnungsmäßig 1,5 mm pro Meter betragen kann. Bei einer Düsenbreite von 3 Metern beträgt die Ausdehnung dementsprechend 4,5 mm. Dies führt dazu, dass bei herkömmlichen Vorrichtungen eine zuverlässige und exakte Ansteuerung der Schrauben erheblich erschwert, wenn nicht gar unmöglich ist.

Die Erfindung schafft darüber hinaus insoweit eine definierte Ausdehnung, als auf der einen Seite die Traverse stationär mit der Breitschlitzdüse verbunden ist. Hier findet bei einer Erwärmung also keine Relativbewegung zwischen der Düse und der Traverse statt. Eine Ausdehnung relativ zur Traverse findet ausschließlich in Richtung der anderen Seite statt. Dies gestattet eine zuverlässige Erfassung der Ausdehnung, wie es im Folgenden noch näher beschrieben wird.

Ein wesentlicher Gesichtspunkt bei der konkreten Ausgestaltung kommt der Verbindung der Traverse an der

Breitschlitzdüse zu. Diese muss einerseits eine Relativbewegung zwischen der Düse und der Traverse zulassen und andererseits stabil genug ausgebildet sein, um das Gewicht der Traverse und der beim Schraubvorgang auftretenden Kräfte zu tragen. Gleichzeitig muss auch bei einer Relativbewegung die Traverse lagestabil gehalten werden. Insoweit wird es als besonders vorteilhaft angesehen, dass die Lageranordnung mindestens eine Stützeinrichtung aufweist, die zweckmäßig der Breitschlitzdüse zugeordnet ist. Vorzugsweise ist die Stützeinrichtung - für eine leichte Montage oder Demontage - lösbar mit der Breitschlitzdüse verbunden.

Die Stützeinrichtung gestattet vorzugsweise ausschließlich eine Relativbewegung in axialer Richtung der Stützeinrichtung.

Eine vorteilhafte Ausführungsform der Erfindung ist dadurch gekennzeichnet, dass die Stützeinrichtung als Lagerzapfen ausgebildet ist, auf dem die Traverse gelagert ist. Ein derartiger Lagerzapfen erfüllt die Anforderungen an eine einfache, präzise und stabile Konstruktion hervorragend. Aus Stabilitäts- und Steifigkeitsgründen können insbesondere zwei Lagerzapfen vorgesehen sein, die noch besser als ein Lagerzapfen in der Lage sind, die auftretenden Kräfte aufzunehmen.

Vorteilhafterweise kann vorgesehen sein, dass die Traverse vorzugsweise beidseitig eine seitliche Halterung aufweist und dass vorzugsweise die Stützeinrichtung (bzw. der oder die Lagerzapfen) durch die Halterung hindurchgreift/-en. Dies gewährleistet eine besonders stabile Konstruktion. Die Lagerzapfen weisen vorzugsweise einen runden Querschnitt auf und wirken mit einem Schiebelager zusammen, das der Halterung der Traverse zugeordnet, insbesondere an der Halterung befestigt ist.

Ein Vorteil der Erfindung besteht in der Nachrüstbarkeit bereits bestehender Anlagen. Gleichermaßen kann es von Vorteil sein, die erfindungsgemäße Traverse als Ganzes - beispielsweise zu Inspektions- oder Reinigungszwecken - abzunehmen. Insoweit wird in wesentlicher Weiterbildung der Erfindung vorgeschlagen, dass die Stützeinrichtung lösbar mit der Breitschlitzdüse verbunden ist. Zum Abnehmen der Traverse kann vorteilhaft die Stützeinrichtung von der Breitschlitzdüse gelöst und die gesamte Anordnung abgenommen werden.

Vorzugsweise weist die Stützeinrichtung eine erste Halteeinrichtung auf. Die erste Halteeinrichtung kann direkt oder indirekt an der Breitschlitzdüse lösbar befestigt sein. Die Stützeinrichtung bzw. im konkreten bevorzugten Fall der Lagerzapfen kann beispielsweise in die Halteeinrichtung eingeschrumpft, eingeschweißt oder eingeschraubt sein. Zur Demontage der Traverse wird die Stützeinrichtung bzw. deren Halteeinrichtung gelöst. Dabei kann die Stützeinrichtung in der Lageranordnung verbleiben. Die Montage kann so erfolgen, dass die Stützeinrichtung zunächst in Eingriff mit der Traverse bzw. deren Halterung gebracht und anschließend die erste Halteeinrichtung an der Breitschlitzdüse oder einer dieser zugeordneten zweiten Halteeinrichtung befestigt wird. Eine bevorzugte Ausführungsform der Erfindung ist dadurch gekennzeichnet, dass die erste Halteeinrichtung mit Abstand zur Breitschlitzdüse angeordnet ist. Dies bedingt, dass die Stützeinrichtung mit Abstand zur Breitschlitzdüse angeordnet ist, wie es für sich genommen als besonders bevorzugt angesehen wird. Insbesondere kann die erste Halteeinrichtung durch einen Abstandhalter, z.B. Bolzen oder Distanzhülsen, in Abstand zu der Breitschlitzdüse gehalten werden. Der Abstand weist den wesentlichen Vorteil auf, dass die Schraubeinrichtung bis an die äußerste Schraube verfahren werden kann. Durch den Abstand der ersten Halteeinrichtung zur Breitschlitzdüse ist hierfür ausreichend Platz. Ein weiterer Vorteil des Abstandes besteht in einem Überhitzungsschutz der Traverse und ihrer Aufbauten.

Vorzugsweise wirkt die erste Halteeinrichtung mit einer zweiten Halteeinrichtung zusammen, die an der Breitschlitzdüse festgelegt ist. Insbesondere kann die erste Halteeinrichtung an der zweiten Halteeinrichtung befestigt sein. Eine derartige Konstruktion gestattet eine vorteilhafte Montage und Demontage der Traverse. Dies gilt vor allem dann, wenn beide Halteeinrichtungen in ihrer gegenseitigen Schnittstelle plattenartig ausgebildet sind, wie es vorteilhaft vorgeschlagen wird.

Vorteilhafterweise ist die erste Halteeinrichtung gegenüber der zweiten Haltevorrichtung verstell- bzw. verschiebbar. Eine derartige Verstellung dient der Ausrichtung der Schraubeinrichtung in Bezug auf die Schrauben und gewährleistet damit einen sicheren Eingriff der Schraubeinrichtung über die gesamte Breite der Breitschlitzdüse.

Zusätzlich wird die Traverse analog auch auf ihrer stationären Seite verstellbar sein. Hier kann die Verstellmöglichkeit so ausgebildet sein, dass die zweite Halteeinrichtung und die Halterung zusammen eine Verstelleinrichtung bilden. Dies kann beispielsweise nach dem Nut-Feder-Prinzip erfolgen. So kann vorgesehen sein, dass die zweite Halteineinrichtung eine Nut aufweist und die Halterung eine mit der Nut zusammenwirkende Feder oder umgekehrt. Als besonders vorteilhaft wird es angesehen, wenn die Verstellung über eine Verstellschraube erfolgt, die entweder in die zweite Halteeinrichtung oder die Halterung eingreift.

Vorzugsweise erfolgt die Verstellung in horizontaler Ebene.

Auf derjenigen Seite, auf der eine Relativbewegung zwischen der Breitschlitzdüse und der Traverse bzw. deren Lageranordnung möglich ist, ist zweckmäßig vorgesehen, dass die zweite Halteeinrichtung an der ersten Halteeinrichtung befestigt ist. Insbesondere kann vorgesehen sein, dass die erste und die zweite Halteeinrichtung relativ zueinander bewegbar sind. Dies ist z.B. dann der Fall, wenn beide Halteeinrichtungen zusammen eine Verstelleinrichtung bilden, bei der vorzugsweise die erste Halterung eine Nut und die zweite Halterung eine Feder aufweist oder umgekehrt.

In wesentlicher Weiterbildung der Erfindung wird vorgeschlagen, dass die Schraubeinrichtung auf einem Wagen festgelegt ist, der entlang einer Linearführung der Traverse verfahrbar ist. Bei der Linearführung kann es sich um eine Wälzführung, also eine Führung mit Wälzkörpern, handeln. Dies gestattet eine reibungsarme Bewegung entlang der Schienen. Gleichzeitig sind die Linearlager so dimensioniert, dass sie die Gewichtskräfte und die Belastungen bei den einzelnen Schraubvorgängen gut aufnehmen können.

Der Antrieb des Wagens der Schraubeinrichtung erfolgt beispielsweise über einen dem Wagen zugeordneten Zahnradantrieb, der mit einer der Breitschlitzdüse zugeordneten stationären Zahnstange in Eingriff steht. Vorteil eines derartigen Antriebs ist seine Robustheit.

Allerdings wurde gefunden, dass auch ein sehr viel "leichterer" Antrieb möglich ist, bei dem der Wagen über einen Zahnriemen antreibbar ist, wie es als besonders vorteilhaft angesehen wird. Hier sitzt der eigentliche Antrieb z.B. an der Traverse, muss also beim Verfahren der Schraubeinrichtung nicht mitverfahren werden. Die bewegten Massen können damit gering gehalten werden. Der Zahnriemen kann für eine bessere Hitzbeständigkeit karbonhaltig sein.

Entlang der Linearführung ist der Wagen über die Breite der Breitschlitzdüse verfahrbar. Hierbei handelt es sich in aller Regel um eine horizontale Ausrichtung. Für die Zustellung auf die Schrauben ist vorteilhaft vorgesehen, dass der Wagen eine zweite Linearführung aufweist, durch die die Schraubeinrichtung in Richtung auf die Schrauben geführt ist. Zweckmäßigerweise weist die zweite Linearführung dieselbe Orientierung auf wie die Schrauben.

Zusätzlich kann eine Einstelleinrichtung vorgesehen sein, die eine Voreinstellung des Abstandes des Schraubwerkzeugs der Schraubeinrichtung in Bezug auf die Schrauben gestattet. Beispielsweise kann die Einstelleinrichtung gebildet werden durch die Halterung der Traverse und eine ihrer Seiten. Die Halterung und die Traversenseite sind gegeneinander verschiebbar. Insbesondere kann die Traversenseite oder die Halterung eine Nut aufweisen, die im wesentlichen dieselbe Orientierung aufweist wie das Schraubwerkzeug.

Bereits zuvor wurde angedeutet, dass im Betrieb der Breitschlitzdüse erhebliche Temperaturen auftreten, die größenordnungsmäßig 200°C bis 300°C betragen können. Je nach Ausführung der Breitschlitzdüse und insbesondere deren Düsenspalt können Konstruktionen erforderlich sein, bei denen die Traverse nicht seitlich, sondern über der Breitschlitzdüse und/oder sehr nah an der Breitschlitzdüse angeordnet ist. Insoweit wird es als besonders vorteilhaft angesehen, wenn die Traverse eine seitliche Halterung aufweist, die derart angeordnet ist, dass die Schraubeinrichtung seitlich bis über die Breitschlitzdüse hinausbewegbar ist. Insbesondere kann vorgesehen sein, dass sich die Schraubeinrichtung in ihrer Ruhestellung (dies kann die Ausgangsstellung sein) seitlich von der Breitschlitzdüse befindet. Dadurch werden temperaturempfindliche Bauteile der Schraubeinrichtung geschont und die Zuverlässigkeit deutlich erhöht. Der Abstand kann dadurch geschaffen werden, dass die erste und ggf. die zweite Halteeinrichtung in Abstand zu der Breitschlitzdüse angeordnet sind. Alternativ oder zusätzlich ist die Führungseinrichtung so lang ausgebildet, dass die Schraubeinrichtung bis über die Seite der Breitschlitzdüse hinaus verfahrbar ist. Besonders vorteilhaft ist es auch, wenn der Abstand der Halterung in ihrer Endstellung zur Breitschlitzdüse mindestens so groß ist, dass die Schraubeinrichtung in der seitlichen Ruhestellung seitlich von der Breitschlitzdüse angeordnet ist.

In verfahrenstechnischer Hinsicht wird zur Lösung der eingangs genannten Aufgabe erfindungsgemäß ein Verfahren zum Einrichten einer Vorrichtung zur Herstellung von flachbahnigen Erzeugnissen vorgeschlagen, das die folgenden Schritte aufweist:
▪ Es wird der Abstand der Schrauben im kalten Zustand ermittelt;
▪ es wird der Wärmeausdehnungskoeffizient der Vorrichtung über deren Breite bestimmt;
▪ es wird eine Ausgangsposition der Schraubeinrichtung festgelegt;
▪ es wird aus dem Schraubenabstand im Kaltzustand und dem Wärmeausdehnungskoeffizient der Schraubenabstand im Betriebszustand bestimmt;
▪ es wird bei Betriebstemperatur der Vorrichtung mit der Schraubeinrichtung manuell eine Referenzschraube angefahren und deren Position erfasst; und
▪ es werden aus der erfassten Position der Referenzschraube die übrigen Schraubenpositionen abgeleitet.

Überraschenderweise lassen sich aus dem Wärmeausdehnungskoeffizienten und Schraubenabstand im kalten Zustand sehr genau die Schraubenabstände im Betriebszustand ermitteln. Das System funktioniert auch dann noch hervorragend, wenn - beispielsweise bei einem Produktwechsel
- die Breitschlitzdüse mit einer anderen Betriebstemperatur gefahren wird. Es muss lediglich eine Referenzschraube festgelegt und mit der Schraubeinrichtung angefahren werden, damit aus dieser festgelegten Position die übrigen Schraubenpositionen ableitbar sind. Dabei hat es sich besonders vorteilhaft bewährt, wenn eine der mittleren Schrauben als Referenzschraube angefahren wird. Dies bedeutet, dass entweder die mittlere Schraube oder eine benachbarte Schraube manuell angefahren wird. Durch diese Maßnahme kann ein eventueller Fehler wirkungsvoll minimal gehalten werden, da die Anzahl der von der Referenzschraube abgeleiteten "errechneten" Schraubenpositionen und damit auch ein eventueller Fehler minimal gehalten werden kann.

In verfahrenstechnisch wesentlicher Weiterbildung der Erfindung wird vorgeschlagen, dass eine minimale Eintauchtiefe für die Schraubeinrichtung vorgegeben wird und dass die Eintauchtiefe beim Anfahren der jeweiligen Schraube überwacht wird. Durch diese vorteilhafte Maßnahme wird äußerst wirkungsvoll und einfach gewährleistet, dass tatsächlich auch jede Schraube im vorgegebenen Umfang gedreht wird. Sofern nämlich eine minimale Eintauchtiefe vorgegeben ist und das Schraubwerkzeug der Schraubeinrichtung erreicht diese minimale Einschraubtiefe nicht - beispielweise weil sie auf dem Schraubenkopf zur Auflage kommt - dreht sich das Schraubwerkzeug minimal, um danach wieder auf die Schraube zugestellt zu werden. Dieser Vorgang wiederholt sich so lange, bis das Schraubwerkzeug in Eingriff mit der Schraube gelangt. Der genaue Verdrehwinkel der Schraube wird festgehalten.

Die Zustellung der Schraubeinrichtung auf die Schraube wird beispielsweise über einen Positionstransmitter überwacht. Alternativ oder zusätzlich wird auch der Drehwinkel der Schraubeinrichtung überwacht. Insgesamt gestattet die Anlage eine Positioniergenauigkeit von ca. 1/100 mm.

Bei dem erfindungsgemäßen Verfahren kommt eine Regelung zum Einsatz, die eine softwaremäßige Erfassung der Parameter und Steuerung gestattet.

Im Folgenden wird die Erfindung anhand von bevorzugten Ausführungsbeispielen im Zusammenhang mit der anhängenden Zeichnung näher erläutert. Die Zeichnung zeigt in
- Figur 1a: in schematischer Darstellung eine perspektivische Ansicht eines ersten Ausführungsbeispiels einer erfindungsgemäßen Vorrichtung;
- Figur 1b: in schematischer Darstellung eine Frontansicht der Vorrichtung nach Figur 1a;
- Figur 1c: in schematischer Darstellung eine erste Seitenansicht der Vorrichtung nach Figur 1a;
- Figur 1d: in schematischer Darstellung eine zweite Seitenansicht der Vorrichtung nach Figur 1a;
- Figur 2a: in schematischer Darstellung eine Draufsicht auf ein zweites Ausführungsbeispiel einer erfindungsgemäßen Vorrichtung;
- Figur 2b: in schematischer Darstellung eine Frontansicht der Vorrichtung nach Figur 2a;
- Figur 2c: in schematischer Darstellung eine erste Seitenansicht der Vorrichtung nach Figur 2a;
- Figur 2d: in schematischer Darstellung eine zweite Seitenansicht der Vorrichtung nach Figur 2a; und
- Figur 3: in schematischer Darstellung einen Wagen mit zwei Schraubeinrichtungen in einer vergrößerten perspektivischen Ansicht.

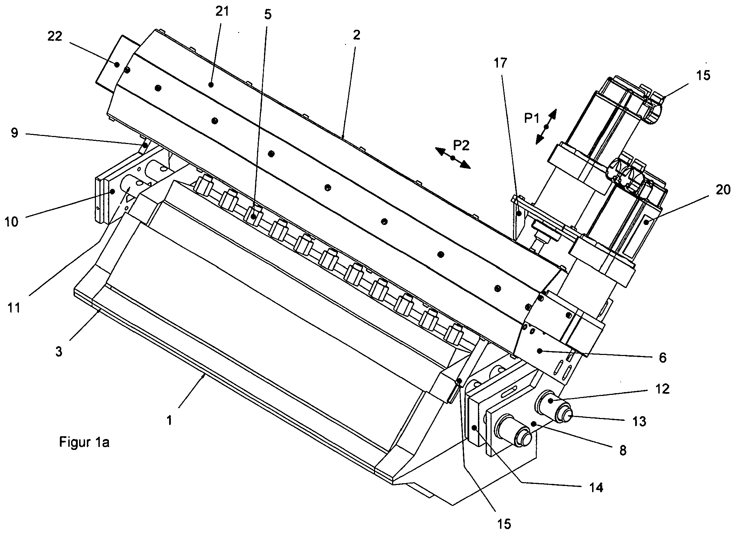

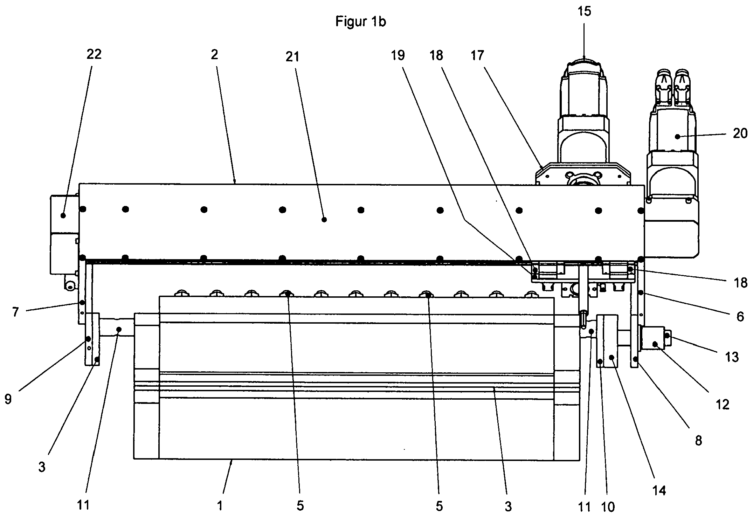

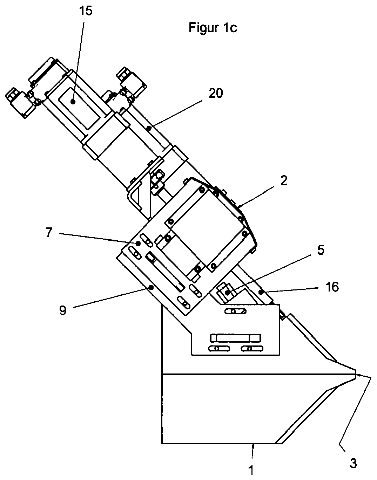

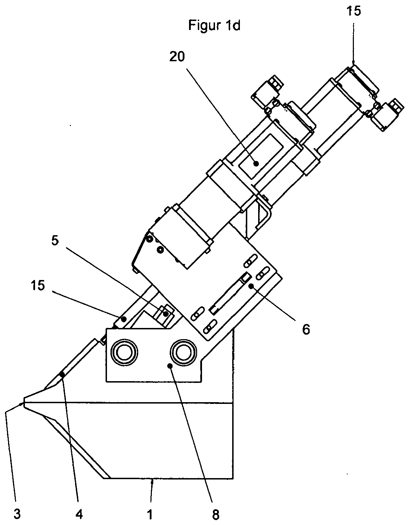

Figur 1 zeigt eine perspektivische Ansicht einer erfindungsgemäßen Vorrichtung zur Herstellung von flachbahnigen Erzeugnissen, wobei im Folgenden auf die Teilansichten 1a bis 1d Bezug genommen wird. Die Vorrichtung weist zwei wesentliche Elemente auf, nämlich eine Breitschlitzdüse 1 und eine Traverse 2. In der Breitschlitzdüse 1 wird Kunststoff oder ein anderes verflüssigbares Material erweicht. Die Breitschlitzdüse 1 weist einen Düsenspalt 3 auf, durch den hindurch der flüssige Kunststoff flachbahnig austritt. Der Breitschlitzdüse kann eine (nicht gezeigte) Kühlwalze nachgeschaltet sein, auf der das heiße und viskose Kunststoffmaterial abkühlt.

Der Strömungsquerschnitt des Düsenspalts 3 ist einstellbar, und zwar über Schrauben 4, wie sie in Figur 1d lediglich angedeutet sind. Die Schrauben 4 erstrecken sich entlang des Düsenspalts 3 über die gesamte Breite der Breitschlitzdüse 1 und weisen typischerweise einen Abstand von ca. 25 mm auf. Zusätzlich kann ein Staubalken in der Breitschlitzdüse angeordnet sein, der die Fließrichtung des flüssigen Materials innerhalb der Breitschlitzdüse beeinflusst. Der Staubalken an sich ist bekannt. Er ist über Schrauben 5 einstellbar. An dieser Stelle sei darauf hingewiesen, dass in den Figuren 1a bis 1d zwar Muttern gezeigt sind, im Rahmen der vorliegenden Patentanmeldung jedoch von Schrauben gesprochen wird, die die gezeigten Muttern zur Einstellung des Staubalkens begrifflich mit umfassen sollen.

Die Traverse 2 erstreckt sich über die gesamte Breite der Breitschlitzdüse 1. Sie weist Seitenwände 6, 7 auf, die mit Halterungen 8, 9 verbunden sind. Auf der linken Seite in Figur 1b und Figur 1a ist die Traverse 2 über die Halterung 9 fest mit der Breitschlitzdüse 1 verbunden, und zwar über eine zweite Halteeinrichtung 10, die über Abstandshalter oder Distanzhülsen 11 seitlich an der Breitschlitzdüse festgelegt ist. Die Abstandshalter oder Distanzhülsen 11 sorgen dafür, dass auch die äußerste linke Schraube 4 bzw. 5 erreicht werden kann, wie es später noch näher ausgeführt wird.

Die zweite Halteeinrichtung 10 und die Halterung 9 wirken als Einstelleinrichtung zusammen. Sie sind im gelösten Zustand gegeneinander verschiebbar. Hierzu ist (nicht sichtbar) eine Nut-Feder-Verbindung ausgebildet.

In Figur 1b und Figur 1a auf der rechten Seite der Breitschlitzdüse weist die Halterung 8 ein Schiebelager 12 auf, in dem Lagerzapfen 13 geführt sind, die ihrerseits über eine erste Halteeinrichtung 14 fest mit der zweiten Halteeinrichtung 10 und damit fest mit der Breitschlitzdüse 1 verbunden sind. Dies bedeutet, dass bei einer wärmebedingten Ausdehnung der Breitschlitzdüse 1 keine Verspannung zwischen der Traverse 2 und der Breitschlitzdüse 1 auftritt. Vielmehr erfolgt eine Relativbewegung zwischen den Lagerzapfen 13 und der Halterung 9 (bzw. deren Schiebelagern 12), wobei mit zunehmender seitlicher Ausdehnung der Breitschlitzdüse 1 die Lagerzapfen 13 die Schiebelager 12 zunehmend durchdringen. Neben dem erheblichen Vorteil, dass die Traverse 2 spannungsfrei gehalten werden kann, bleibt die Traverse darüber hinaus in einer definierten Position in Bezug auf die Breitschlitzdüse 1. Dies wiederum hat erhebliche Vorteile bei der Positioniergenauigkeit der Schraubeinrichtung, wie es nachfolgend noch näher erläutert wird.

Die Schraubeinrichtung ist mit dem Bezugszeichen 15 gekennzeichnet. Sie weist einen Schraubenschlüssel 16 auf, der vorliegend als Außen-Sechskant-Schlüssel ausgebildet ist, jedoch grundsätzlich an die Schrauben 4, 5 anpassbar ist. Die Schraubeinrichtung 15 dient dazu, die Schrauben 4 einzustellen. Hierzu ist die Schraubeinrichtung 15 in Richtung des Pfeils P1 bewegbar. Mit den Schrauben 4 wird der Querschnitt des Düsenspalts 3 eingestellt.

Die Schraubeinrichtung 15 sitzt auf einer Trägereinrichtung 17, die über Linearlager 18 verschiebbar auf einem Wagen 19 montiert ist. Der Wagen 19 ist zusammen mit der Schraubeinrichtung 15 in Richtung des Pfeils P2 über die Breite der Breitschlitzdüse 1 verfahrbar.

Die Schraubeinrichtung 15 ist in der rechtsseitigen Ruhestellung gezeigt. In dieser Ruhestellung befindet sich die Schraubeinrichtung 15 vorteilhafterweise seitlich des Düsenspalts. Hierdurch wird die Schraubeinrichtung 15 vor Überhitzung geschützt. Die Schraubeinrichtung ist in der Lage, so weit in Figur 1 nach links zu verfahren, dass auch die äußerste Schraube angesteuert werden kann. Hierzu sind die Abstandshalter bzw. Distanzhülsen 11 vorgesehen.

Der Wagen 19 wird angetrieben durch eine Antriebseinrichtung 20, die mit einem (aufgrund der Grundplatte 21 nicht sichtbaren) Zahnriemen zusammenwirkt. Letzterer ist mit dem Wagen 19 verbunden und wird mittels einer Riemenspannvorrichtung 22 auf Spannung gehalten. Durch die Antriebseinrichtung 20 ist die Schraubeinrichtung 15 sehr präzise in Bezug auf die Schrauben 4 ausrichtbar.

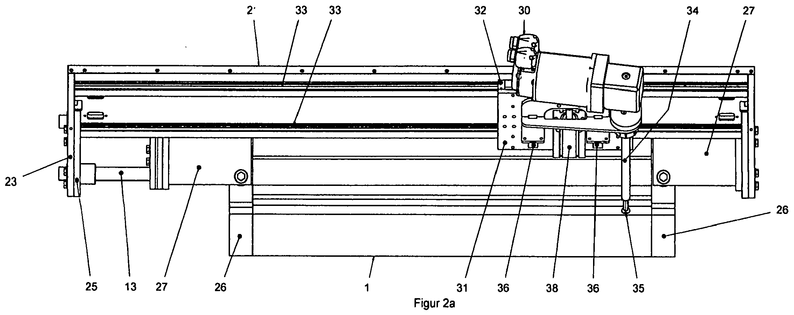

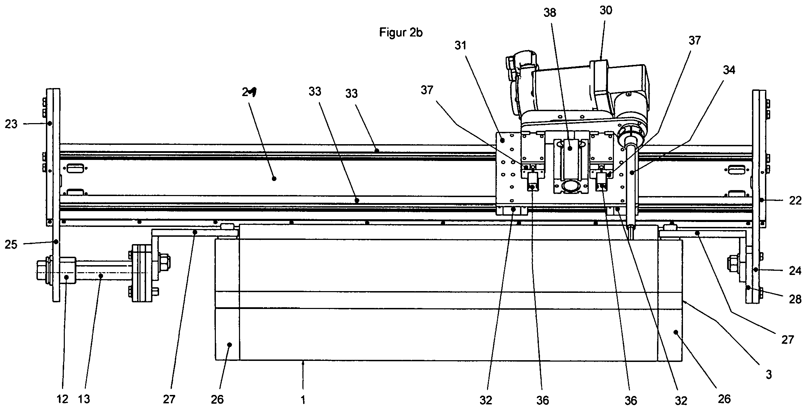

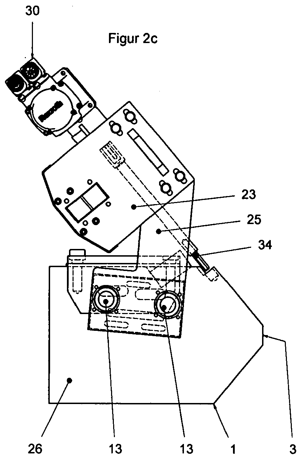

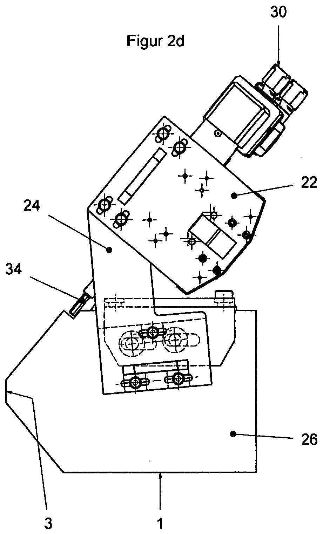

Figur 2 zeigt ein zweites Ausführungsbeispiel der erfindungsgemäßen Vorrichtung, wobei Figur 2a eine Draufsicht, Figur 2b eine Frontansicht und Figur 2c und Figur 2d eine Seitenansicht zeigen. Auch bei dem zweiten Ausführungsbeispiel ist eine horizontale Breitschlitzdüse 1 dargestellt, also eine Breitschlitzdüse, bei der das Erzeugnis horizontal aus dem Spalt 3 austritt. Mit dem Bezugszeichen 2 ist analog zum ersten Ausführungsbeispiel die Traverse gekennzeichnet, wobei bei dem vorliegenden Ausführungsbeispiel die Grundplatte 21 gegenüber Figur 1 seitenverkehrt ist.

Bevor im Detail auf das zweite Ausführungsbeispiel eingegangen wird, sei an dieser Stelle darauf hingewiesen, dass bereits bestehende Breitschlitzdüsen mit der erfindungsgemäßen Traverse nachrüstbar sind. Dies bedeutet, dass je nach Art der bestehenden Breitschlitzdüse die Traverse und deren Anbringung an die Breitschlitzdüse angepasst werden muss. Insoweit ist zwar der Grundaufbau jeweils übereinstimmend, in der jeweiligen konkreten Ausgestaltung können die erfindungsgemäßen Vorrichtungen aber voneinander abweichen.

Bei dem vorliegenden Ausführungsbeispiel gilt dies beispielsweise für die Anbringung der Traverse 2 an der Breitschlitzdüse 1. Wie auch bei dem ersten Ausführungsbeispiel weist die Traverse 2 jeweils eine Seitenwand 22, 23 auf. Die Seitenwänden 22, 23 sind an jeweils einer Halterung 24, 25 festgelegt, durch die die Traverse 2 an der Breitschlitzdüse 1 befestigt werden kann.

Die Befestigung der Traverse 2 an der Breitschlitzdüse 1 weicht von dem ersten Ausführungsbeispiel insoweit ab, als die Traverse nicht seitlich an den Seitenwänden der Breitschlitzdüse befestigt ist, sondern oben auf der jeweiligen Seitenwand 26 der Breitschlitzdüse. Hierzu sind an der Breitschlitzdüse 1 Abstandshalter 27 angeschraubt. In Figur 2a und Figur 2b auf der rechten Seite ist die Traverse 2 an der Breitschlitzdüse 1 stationär festgelegt, und zwar über eine Halteeinrichtung 28, die den Abstandshalter 27 mit der Halterung 24 fest verbindet, wobei die Verbindung lösbar ist, wie es durch die Schraube 29 gekennzeichnet ist.

Auf der anderen - der linken - Seite der in Figur 2a und Figur 2b gezeigten Breitschlitzdüse 1 sind Lagerzapfen 13 vorgesehen, die mit dem Abstandshalter 27 verbunden sind. Die Lagerzapfen 13 greifen durch die Halterung 25 hindurch, die zur Lagerung der Lagerzapfen jeweils ein Schiebelager 12 aufweist. Schiebelager 12 und Lagerzapfen 13 bilden eine Lageranordnung. Bei einer wärmebedingten Ausdehnung der Breitschlitzdüse 1 findet eine Relativbewegung zwischen der Breitschlitzdüse 1 und der Traverse 2 statt, bei der sich die Lagerzapfen 13 durch die Halterung 25 hindurchbewegen. Gleichwohl bleibt die Traverse 2 gegenüber der Breitschlitzdüse ausgerichtet.

Die Traverse 2 weist eine Schraubeinrichtung 30 auf, die über die Breite der Traverse verfahrbar ist. Die Schraubeinrichtung 30 ist hierzu auf einem Wagen 31 montiert, der vier Linearlager 32 aufweist, die mit zwei Schienen 33 in Eingriff stehen. Die Schienen 33 und die Linearlager 32 bilden eine Linearführung für den Wagen 31. Mit dem Wagen 31 verbunden ist ein Zahnriemen, der aus Übersichtsgründen nicht dargestellt ist. Gleiches gilt für den Zahnriemenantrieb.

Die Schraubeinrichtung 30 weist ein Schraubwerkzeug 34 zum Betätigen der Schrauben 35 des Düsenspalts 3 auf, von denen in Figur 2a lediglich eine Schraube 35 angedeutet ist. Bei den Schrauben 35 kann es sich beispielsweise um InnenSechskantschrauben handeln, in die das als Außen-Sechskant ausgebildete Schraubwerkzeug 34 eingreift.

Die Schraubeinrichtung 30 ist in Richtung auf die Schrauben 35 beweglich auf dem Wagen 31 angeordnet. Hierzu ist die Schraubeinrichtung 30 auf einer Linearführung montiert, die bei dem gezeigten Ausführungsbeispiel zwei Schienen 36 und zwei Linearlager 37 aufweist. Der Vorschub der Schraubeinrichtung erfolgt über eine Vorschubeinrichtung, die als Zylinderanordnung 38, insbesondere als pneumatische Zylinderanordnung ausgebildet sein kann. Die Stellung der Schraubeinrichtung 30 wird im Betrieb überwacht. Gleiches gilt für den Drehwinkel der Schraubeinrichtung 30. Die Überwachung erfolgt jeweils über einen Inkrementalgeber.

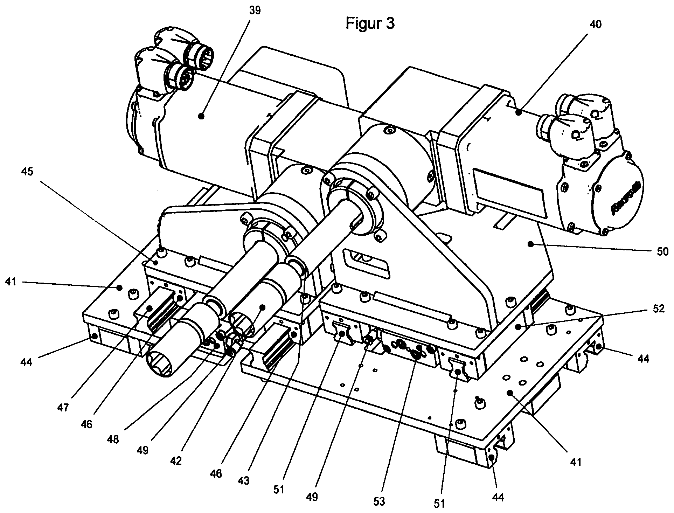

Figur 3 zeigt ein weiteres Ausführungsbeispiel einer erfindungsgemäßen Anordnung mit einer ersten Schraubeinrichtung 39 und einer zweiten Schraubeinrichtung 40. Dieses Beispiel verdeutlicht, dass es möglich ist - und im Rahmen des Erfindungsgedankens liegt - zwei Schraubeinrichtungen 39, 40 auf einem Wagen 41 anzuordnen, wobei die erste Schraubeinrichtung 39 zur Einstellung der Düsenspaltschrauben und die zweite Schraubeinrichtung 40 zur Einstellung der Staubalkenschrauben dient. Hierzu weist die Schraubeinrichtung 40 ein Schraubwerkzeug 42 auf. Mit dem Bezugszeichen 43 ist eine optionale Steckeinrichtung angedeutet, auf die das Schraubwerkzeug 42 oder ein beliebiges anderes Schraubwerkzeug aufsteckbar ist.

Der Wagen 41 weist Linearlager 44 auf, die mit (hier nicht gezeigten) Schienen der Traverse zusammenwirken. Durch die Linearführung können der Wagen und damit die beiden Schraubeinrichtungen 39, 40 über die Breite der Breitschlitzdüse verfahren werden.

Sowohl die Schraubeinrichtung 39 als auch die Schraubeinrichtung 40 sind in Richtung auf die jeweiligen Schrauben zustellbar. Hierzu ist die Schraubeinrichtung 39 auf einem Schlitten 45 gelagert, der seinerseits über Linearlager 46 auf Schienen 47 gelagert verfahrbar ist. Betätigt wird der Schlitten über eine Zylinderanordnung 48, die vorzugsweise pneumatisch betrieben wird, wie es durch die Anschlüsse 49 angedeutet ist.

Analog ist die Schraubeinrichtung 40 auf einem Schlitten 50 gelagert, der auf seiner Unterseite Schienen 51 aufweist, die in Linearlagern 52 geführt sind. Betätigt wird der Schlitten über eine Zylinderanordnung 53.

Im Rahmen der Erfindung wurde der Begriff "Stützeinrichtung" verwendet. Hierunter soll beispielsweise eine Schiene verstanden werden, auf der sich die Traverse mit einem Gleit- oder Wälzlager abstützt. Auch der Lagerzapfen 13 fällt unter den Begriff der "Stützeinrichtung". Die Stützeinrichtung kann Bestandteil der Lageranordnung sein. Der Begriff der "Lageranordnung" wird im herkömmlichen Sinn verstanden. Sie weist vorzugsweise ein Lager auf, das beispielsweise als Schiebelager, aber auch als eventuelles Wälz- oder Gleitlager ausgebildet sein kann, wobei das Lager vorzugsweise mit der Stützeinrichtung die Lageranordnung bildet. Die Stützeinrichtung wird man in aller Regel der Breitschlitzdüse zuordnen. Die Traverse ist zweckmäßig auf der Stützeinrichtung gelagert. Alternativ, wenn auch aufwendiger, ist die Lageranordnung so ausgestaltet, dass die Stützeinrichtung der Traverse und das Lager der Breitschlitzdüse zugeordnet ist.

**Bezugszeichenliste**

| | | | |
|---|---|---|---|
| 1 | Breitschlitzdüse | 26 | Seitenwand |
| 2 | Traverse | 27 | Abstandshalter |
| 3 | Düsenspalt | 28 | Halteeinrichtung |
| 4 | Schrauben | 29 | Schraube |
| 5 | Schrauben | 30 | Traverse |
| 6 | Seitenwand | 31 | Wagen |
| 7 | Seitenwand | 32 | Linearlager |
| 8 | Halterung | 33 | Schienen |
| 9 | Halterung | 34 | Schraubwerkzeug |
| 10 | Halteeinrichtung | 35 | Schraube |
| 11 | Distanzhülse | 36 | Schiene |
| 12 | Schiebelager | 37 | Linearlager |
| 13 | Lagerzapfen | 38 | Zylinderanordnung |
| 14 | Halteeinrichtung | 39 | Schraubeinrichtung |
| 15 | Schraubeinrichtung | 40 | Schraubeinrichtung |
| 16 | Schraubenschlüssel | 41 | Wagen |
| 17 | Trägereinrichtung | 42 | Schraubwerkzeug |
| 18 | Linearlager | 43 | Steckeinrichtung |
| 19 | Wagen | 44 | Linearlager |
| 20 | Antriebseinrichtung | 45 | Schlitten |
| 21 | Grundplatte | 46 | Linearlager |
| 22 | Seitenwand | 47 | Schiene |
| 23 | Seitenwand | 48 | Zylinderanordnung |
| 24 | Halterung | 49 | Anschlüsse |
| 25 | Halterung | 50 | Schlitten |
| | | 51 | Schiene |
| | | 52 | Linearlager |
| | | 53 | Zylinderanordnung |

## Patentansprüche

1. Vorrichtung zur Herstellung von flachbahnigen Erzeugnissen, mit
- einer Breitschlitzdüse (1), deren Spalt (3) und/oder Staubalken mittels Schrauben (4; 5) einstellbar ist,
- mindestens einer Schraubeinrichtung (15; 30; 39; 40) zum Einstellen der Schrauben, und mit
- einer Traverse (2), auf der die Schraubeinrichtung hinund herbewegbar ist,
- wobei die Traverse (2) auf der einen Seite der Breitschlitzdüse (1) starr mit der Breitschlitzdüse verbunden ist,
**dadurch gekennzeichnet,**
- **dass** die Vorrichtung auf der anderen Seite der Breitschlitzdüse (1) mindestens eine Lageranordnung aufweist, die eine Relativbewegung zwischen der Breitschlitzdüse und der Traverse (2) gestattet.

2. Vorrichtung nach Anspruch 1, **dadurch gekennzeichnet, dass** die Lageranordnung mindestens eine Stützeinrichtung aufweist, die vorzugsweise der Breitschlitzdüse (1) zugeordnet ist.

3. Vorrichtung nach Anspruch 2, **dadurch gekennzeichnet, dass** die Stützeinrichtung als Lagerzapfen (13) ausgebildet ist, auf dem die Traverse (2) beweglich gelagert ist.

4. Vorrichtung nach Anspruch 2 oder 3, **dadurch gekennzeichnet, dass** die Stützeinrichtung lösbar mit der Breitschlitzdüse (1) verbunden ist.

5. Vorrichtung nach einem der Ansprüche 2 bis 4, **dadurch gekennzeichnet, dass** die Stützeinrichtung eine erste Halteeinrichtung (14) aufweist, die vorzugsweise mit Abstand zur Breitschlitzdüse (1) angeordnet ist.

6. Vorrichtung nach Anspruch 5, **dadurch gekennzeichnet, dass** die erste Halteeinrichtung (14) mit einer zweiten Halteeinrichtung (10) zusammenwirkt, die an der Breitschlitzdüse (1) festgelegt ist.

7. Vorrichtung nach Anspruch 6, **dadurch gekennzeichnet, dass** die erste Halteeinrichtung (14) gegenüber der zweiten Haltevorrichtung (10) verstellbar ist.

8. Vorrichtung nach einem der Ansprüche 1 bis 7, **dadurch gekennzeichnet, dass** die Schraubeinrichtung (15; 30; 39; 40) auf einem Wagen (19; 31) angeordnet ist, der entlang einer Linearführung (33) der Traverse verfahrbar ist.

9. Vorrichtung nach Anspruch 8, **dadurch gekennzeichnet, dass** der Wagen (19; 31) über einen Zahnriemen antreibbar ist, wobei vorzugsweise der Antrieb des Zahnriemens stationär an der Traverse (2) festgelegt ist.

10. Vorrichtung nach Anspruch 8 oder 9, **dadurch gekennzeichnet, dass** der Wagen (31) eine zweite Linearführung (36, 37; 46, 47; 51, 52) aufweist, durch die die Schraubeinrichtung (15; 30; 39; 40) in Richtung auf die Schrauben (4; 5; 35) geführt ist.

11. Vorrichtung nach einem der Ansprüche 1 bis 10, **dadurch gekennzeichnet, dass** die Traverse eine seitliche Halterung (8; 9; 24; 25) aufweist, die derart angeordnet ist, dass die Schraubeinrichtung (15; 30; 39; 40) seitlich bis über die Breitschlitzdüse hinausbewegbar ist.

12. Verfahren zum Einrichten einer Vorrichtung zur Herstellung von flachbahnigen Erzeugnissen,
▪ wobei die Vorrichtung mindestens eine Schraubeinrichtung aufweist, die zur Einstellung von Schrauben eines Spalts und/oder eines Staubalkens der Vorrichtung dient und entlang der Vorrichtung verfahrbar ist und
▪ wobei das Verfahren die folgenden Schritte aufweist:
▪ Es wird der Abstand der Schrauben im kalten Zustand ermittelt;
▪ Es wird der Wärmeausdehnungskoeffizient der Vorrichtung über deren Breite bestimmt;
▪ Es wird eine Ausgangsposition der Schraubeinrichtung festgelegt;
▪ Es wird aus dem Schraubenabstand im Kaltzustand und dem Wärmeausdehnungskoeffizient der Schraubenabstand im Betriebszustand bestimmt;
▪ Es wird bei Betriebstemperatur der Vorrichtung mit der Schraubeinrichtung manuell eine Referenzschraube angefahren und deren Position erfasst; und
▪ Es werden aus der erfassten Position der Referenzschraube die übrigen Schraubenpositionen abgeleitet.

13. Verfahren nach Anspruch 12, **dadurch gekennzeichnet, dass** eine der mittleren Schrauben als Referenzschraube angefahren wird.

14. Verfahren nach Anspruch 12 oder 13, **dadurch gekennzeichnet, dass** eine minimale Eintauchtiefe für die Schraubeinrichtung vorgegeben wird und dass die Eintauchtiefe beim Anfahren der jeweiligen Schraube überwacht wird.

## Claims

1. Apparatus for producing flat-web products, having
- a slot die (1), the gap (3) and/or restrictor bar of which can be set by means of screws (4; 5),
- at least one screwing device (15; 30; 39; 40) for setting the screws, and having
- a crossmember (2), on which the screwing device can be moved to and fro,
- wherein the crossmember (2) is connected fixedly to the slot die on one side of the slot die (1), **characterized**
- **in that** the apparatus has at least one bearing arrangement on the other side of the slot die (1), which at least one bearing arrangement permits a relative movement between the slot die and the crossmember (2).

2. Apparatus according to Claim 1, **characterized in that** the bearing arrangement has at least one supporting device which is preferably assigned to the slot die (1).

3. Apparatus according to Claim 2, **characterized in that** the supporting device is configured as a bearing journal (13), on which the crossmember (2) is mounted movably.

4. Apparatus according to Claim 2 or 3, **characterized in that** the supporting device is connected releasably to the slot die (1).

5. Apparatus according to one of Claims 2 to 4, **characterized in that** the supporting device has a first holding device (14) which is preferably arranged at a spacing from the slot die (1).

6. Apparatus according to Claim 5, **characterized in that** the first holding device (14) interacts with a second holding device (10) which is fixed on the slot die (1).

7. Apparatus according to Claim 6, **characterized in that** the first holding device (14) can be adjusted with respect to the second holding apparatus (10).

8. Apparatus according to one of Claims 1 to 7, **characterized in that** the screwing device (15; 30; 39; 40) is arranged on a carriage (19; 31) which can be moved along a linear guide (33) of the crossmember.

9. Apparatus according to Claim 8, **characterized in that** the carriage (19; 31) can be driven via a toothed belt, the drive of the toothed belt preferably being fixed in a stationary manner on the crossmember (2).

10. Apparatus according to Claim 8 or 9, **characterized in that** the carriage (31) has a second linear guide (36, 37; 46, 47; 51, 52), by way of which the screwing device (15; 30; 39; 40) is guided in the direction of the screws (4; 5; 35).

11. Apparatus according to one of Claims 1 to 10, **characterized in that** the crossmember has a lateral holder (8; 9; 24; 25) which is arranged in such a way that the screwing device (15; 30; 39; 40) can be moved laterally as far as beyond the slot die.

12. Method for setting up an apparatus for producing flat-web products,
▪ the apparatus having at least one screwing device which serves to set screws of an gap and/or a restrictor bar of the apparatus and can be moved along the apparatus, and
▪ the method having the following steps:
▪ the spacing of the screws is determined in the cold state;
▪ the coefficient of thermal expansion of the apparatus is defined over its width;
▪ a starting position of the screwing device is fixed;
▪ the screw spacing in the operating state is defined from the screw spacing in the cold state and the coefficient of thermal expansion;
▪ at the operating temperature of the apparatus, a reference screw is moved to manually by way of the screwing device and its position is detected; and
▪ the remaining screw positions are derived from the detected position of the reference screw.

13. Method according to Claim 12, **characterized in that** one of the middle screws is moved to as reference screw.

14. Method according to Claim 12 or 13, **characterized in that** a minimum dipping depth is predefined for the screwing device, and **in that** the dipping depth is monitored when moving to the respective screw.

## Revendications

1. Dispositif pour la fabrication de produits plats en bandes, comprenant
- une filière à fente large (1) dont la fente (3) et/ou la barre de restriction peuvent être ajustées au moyen de vis (4 ; 5),
- au moins un dispositif de vissage (15 ; 30 ; 39 ; 40) pour ajuster les vis, et
- une traverse (2) sur laquelle le dispositif de vissage peut être déplacé d'avant en arrière,
- la traverse (2) étant connectée rigidement à la filière à fente large sur un côté de la filière à fente large (1),
**caractérisé en ce que**
- le dispositif présente de l'autre côté de la filière à fente large (1) au moins un agencement de palier qui permet un mouvement relatif entre la filière à fente large et la traverse (2).

2. Dispositif selon la revendication 1, **caractérisé en ce que** l'agencement de palier présente au moins un dispositif de support qui est associé de préférence à la filière à fente large (1).

3. Dispositif selon la revendication 2, **caractérisé en ce que** le dispositif de support est réalisé sous forme de tourillon (13) sur lequel la traverse (2) est supportée de manière déplaçable.

4. Dispositif selon la revendication 2 ou 3, **caractérisé en ce que** le dispositif de support est connecté de manière détachable à la filière à fente large (1).

5. Dispositif selon l'une quelconque des revendications 2 à 4, **caractérisé en ce que** le dispositif de support présente un premier dispositif de retenue (14) qui de préférence est disposé à distance de la filière à fente large (1).

6. Dispositif selon la revendication 5, **caractérisé en ce que** le premier dispositif de retenue (14) coopère avec un deuxième dispositif de retenue (10) qui est fixé à la filière à fente large (1).

7. Dispositif selon la revendication 6, **caractérisé en ce que** le premier dispositif de retenue (14) peut être réglé par rapport au deuxième dispositif de retenue (10).

8. Dispositif selon l'une quelconque des revendications 1 à 7, **caractérisé en ce que** le dispositif de vissage (15 ; 30 ; 39 ; 40) est disposé sur un chariot (19 ; 31) qui peut être déplacé le long d'un guide linéaire (33) de la traverse.

9. Dispositif selon la revendication 8, **caractérisé en ce que** le chariot (19 ; 31) peut être entraîné par le biais d'une courroie dentée, l'entraînement de la courroie dentée étant de préférence fixé de manière stationnaire sur la traverse (2).

10. Dispositif selon la revendication 8 ou 9, **caractérisé en ce que** le chariot (31) présente un deuxième guide linéaire (36, 37 ; 46, 47 ; 51, 52) par lequel le dispositif de vissage (15 ; 30 ; 39 ; 40) est guidé dans la direction des vis (4 ; 5 ; 35).

11. Dispositif selon l'une quelconque des revendications 1 à 10, **caractérisé en ce que** la traverse présente une fixation latérale (8 ; 9 ; 24 ; 25) qui est disposée de telle sorte que le dispositif de vissage (15 ; 30 ; 39 ; 40) puisse être déplacé latéralement jusqu'au-delà de la filière à fente large.

12. Procédé pour disposer un dispositif de fabrication de produits plats en bandes,
- le dispositif présentant au moins un dispositif de vissage qui sert à ajuster des vis d'une fente et/ou d'une barre de restriction du dispositif et qui peut être déplacé le long du dispositif, et
- le procédé présentant les étapes suivantes :
- la distance des vis est déterminée à l'état froid ;
- le coefficient de dilatation thermique du dispositif est déterminé sur sa largeur ;
- une position de départ du dispositif de vissage est déterminée ;
- la distance des vis à l'état de fonctionnement est déterminée à partir de la distance des vis à l'état froid et à partir du coefficient de dilatation thermique ;
- une vis de référence est approchée manuellement du dispositif avec le dispositif de vissage à la température de fonctionnement et sa position est détectée ; et
- les autres positions des vis sont déduites de la position détectée de la vis de référence.

13. Procédé selon la revendication 12, **caractérisé en ce que** l'une des vis centrales est avancée en tant que vis de référence.

14. Procédé selon la revendication 12 ou 13, **caractérisé en ce qu'**une profondeur d'enfoncement minimale pour le dispositif de vissage est prédéfinie et **en ce que** la profondeur d'enfoncement est contrôlée lors de l'avance de chaque vis.
